# EUROPÄISCHE PATENTSCHRIFT

(11) **EP 0 680 976 B1**
(45) Veröffentlichungstag und Bekanntmachung des Hinweises auf die Patenterteilung: **29.12.1997**
(21) Anmeldenummer: 95103108.7
(22) Anmeldetag: 04.03.1995
(51) Int. Cl.: C08F 210/18, C08F 2/06, C08F 4/629, C08F 4/68

(54) **Verfahren zur Herstellung von Ethylencopolymeren**
Process for producing ethylene copolymers
Procédé de préparation de copolymères d'éthylène

(30) Priorität: 05.05.1994 DE 4415872
(43) Veröffentlichungstag der Anmeldung: 08.11.1995
(73) Patentinhaber: HÜLS AKTIENGESELLSCHAFT, 45764 Marl (DE)
(72) Erfinder: Bordeianu, Radu, Dr., D-45772 Marl (DE); Theis, Christoph, Dr., D-53859 Niederkassel (DE)

(56) Entgegenhaltungen:
- EP-A- 0 024 485
- EP-A- 0 044 119
- CA-A- 1 272 847

## Beschreibung

Gegenstand der Erfindung ist ein Verfahren zur Herstellung von chlorarmen Ethylencopolymerisaten durch Lösungspolymerisation mit vanadinhaltigen Mischkatalysatoren unter Einsatz bestimmter, chlorarmer Aktivatoren.

Es ist bekannt, daß man Ethylen mit anderen α-Olefinen und ggf. nichtkonjugierten Dienen in Anwesenheit von metallorganischen (Ziegler-Natta-) Mischkatalysatoren polymerisieren kann. Die Polymerisation erfolgt in organischen Lösungsmitteln. Als Katalysatoren werden Übergangsmetallverbindungen der Nebengruppen IV bis VI des periodischen Systems (meistens Vanadinverbindungen in der Wertigkeitsstufe 3+ bis 5+) zusammen mit metallorganischen Verbindungen der Hauptgruppen I bis III (meistens aluminiumorganische Verbindungen) eingesetzt. Solche katalytischen Systeme zeigen eine sehr hohe Anfangsaktivität, welche jedoch infolge der schnellen Reduktion des Vanadins zu niedrigen, polymerisationsinaktiven Wertigkeitsstufen (z.B. 2+) rasch abnimmt. Um technisch akzeptable Polymerausbeuten zu erzielen werden Aktivatoren, die das Vanadin auf polymerisationsaktive Wertigkeitsstufen zurückoxidieren, eingesetzt.

Die effizientesten Aktivatoren der vanadinhaltigen Katalysatoren sind chlorhaltige Substanzen. In der Praxis haben sich polychlorierte Verbindungen wie z.B. Trichloressigsäureester (DE-A-15 70 726, Hercules Powder Co.), Perchlorcrotonsäureester (DE-A-15 95 442, Hüls AG) oder Hexachlorcyclopentadien (DE-A-14 95 698, Farbwerke Hoechst AG) bewährt. Diese Aktivatoren haben allerdings den entscheidenden Nachteil, daß die resultierenden Copolymere einen zu hohen Chlorgehalt aufweisen. Manche Polymereigenschaften, in erster Linie die Alterungsbeständigkeit, werden vom Chlorgehalt negativ beeinflußt. Außerdem führen chlorhaltige Polymere zu verstärkter Korrosion an Verarbeitungsanlagen. Chlorärmere Verbindungen, z.B. Mono- und Dichlorbutensäureester (CA-A-1 272 847, Uniroyal Chemical Co.) zeigen meistens eine niedrige Aktivität. Dies führt in der Praxis zu niedrigem Feststoffgehalt in der Polymerlösung. Um diesen Mangel zu beseitigen, wären unverhältnismäßig große Verhältnisse von Aktivator/VOCl₃ notwendig, was wirtschaftlich sehr nachteilig ist.

In den letzten Jahren wurden chlorärmere, wirksame Verbindungen als Aktivatoren beansprucht, z.B. Dichlorphenylessigsäureester (EP-B-0 044 119 und 0 044 595, Stamicarbon B.V.). Allerdings kann auch bei solchen Aktivatoren die Chlorkonzentration im Polymer nur über teuere Polymerwäschen auf das notwendige niedrige Niveau herabgesetzt werden.

Es wurde nun überraschend gefunden, daß monohalogenierte, mit einer aromatischen Gruppe substituierte 2-Halogenmalonsäureester der allgemeinen Formel: 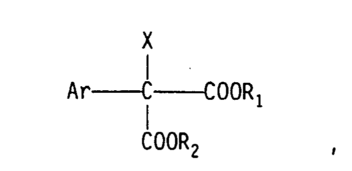 wobei X = F, Cl, Br oder J, Ar einen aromatischen Rest wie beispielsweise Phenyl, Pyridyl, Thienyl, der ggf. einfach oder mehrfach mit Alkyl-oder Alkoxygruppen substituiert und direkt oder über eine zusätzliche Carbonylgruppe mit dem zentralen C-Atom verbunden sein kann, R₁ bzw. R₂ Kohlenwasserstoffreste mit 1 bis 20 Kohlenstoffatomen wie Alkyl-, Aryl-, Aralkyl- oder Cycloalkylgruppen bedeuten, als Aktivatoren von V/Al-Katalysatorsystemen eingesetzt, zu Ethylencopolymeren mit deutlich reduziertem Chlorgehalt führen.

Vorzugsweise werden 2-Halogen-2-phenylmalonsäurealkylester, insbesondere 2-Chlor- oder 2-Brom-2-phenyl-malonsäureester, z.B. 2-Chlor-2-phenylmalonsäurediethylester eingesetzt. Das Aktivator/Vanadin-Molverhältnis liegt zwischen 0,5 und 100, vorzugsweise zwischen 1 und 20.

Ausserdem kann ein Alkylester der 2-Chlor-2-phenylmalonsäure, wobei R₁ und R₂ gleichzeitig oder unabhängig eine Methyl-, Ethyl-, Propyl-, Butyl- oder Pentylgruppe darstellen, eingesetzt werden.

Beim Einsatz dieses Aktivators sind Feststoffgehalte zu erzielen, die einen guten Umsatz erreichen und somit zur guten Wirtschaftlichkeit des erfindungsgemäßen Verfahrens beitragen.

Die im vorliegenden Verfahren eingesetzten α-Olefine enthalten 3 bis 10 Kohlenstoffatome. Vorzugsweise wird Propen verwendet. Der Ethengehalt im Copolymer liegt zwischen 25 und 85 Gew.-%, für kautschukartige Copolymere vorzugsweise zwischen 40 und 75 Gew.-%.

Zur Copolymervulkanisation sind bei den meisten Vernetzungssystemen ungesättigte Seitenketten notwendig. Zu diesem Zweck wird als drittes Monomer ein vorzugsweise nicht-konjugiertes Dien, z.B. 5-Ethylidennorbornen-2, Dicyclopentadien oder 1,5-Hexadien, eingesetzt. Die Konzentration des Termonomers im Copolymer beträgt 1 bis 15 Gew.-%, vorzugsweise 1 bis 10 Gew.-%.

Als Vanadinkomponente des Katalysatorsystems können Halogenide, Oxihalogenide, Acetylacetonate oder Alkoholate, z.B. VCl₃, VCl₄, VOCl₃, Vanadiumtrisacetylacetonat, Vanadylbisacetylacetonat oder Alkylvanadate mit 1 bis 20 Kohlenstoffatomen eingesetzt werden.

Vorzugsweise wird Vanadinoxytrichlorid, -tetrachlorid, -acetylacetonat oder -naphtenat, aber auch Triethoxyvanadat, Diethoxymonochlor-, Ethoxydichlor, Tributoxy, -Dibutoxymonochlor- oder Butoxydichlorvanadat eingesetzt.

Als aluminiumorganische Komponente des Katalysatorsystems können z.B. Ethylaluminiumsesquichlorid, Ethylaluminiumdichlorid, Di-ethylaluminiumchlorid, Diisobutylaluminiumchlorid Isobutylaluminiumchlorid, Isobutylaluminium sesquichlorid, Trihexylaluminium oder Gemische dieser Verbindungen eingesetzt werden. Das Al/V-Molverhältnis liegt zwischen 1 und 1000, vorzugsweise zwischen 2 und 50.

Zur Molekulargewichtsregelung werden ggf. Kettenübertrager (z.B. Wasserstoff, Ammoniak, Amine, Dialkylzink, Alkylhalogenide oder Acetylenkohlenwasserstoffe) in zur Erzielung des gewünschten Molgewichts notwendiger Menge eingesetzt.

Die Polymerisationsreaktion wird in inerten Lösungsmitteln wie Alkane (Butan, Pentan, Hexan, C₆-Schnitte, Heptan, etc.) oder Arene (Benzol, Toluol), oder auch in flüssigem α-Olefin, bei Temperaturen zwischen 0 und 100 °C, vorzugsweise zwischen 20 und 80 °C, durchgeführt.

Die folgenden Beispiele sollen die Erfindung näher erläutern.

### Beispiel 1

Die Polymerisation wurde nach bekannten Methoden durchgeführt (DE-A-15 95 442, Hüls AG). Es wurde ein EPDM mit einem Ethylengehalt von etwa 50 % und einem Gehalt von Ethylidennorbornen (ENB) von ca. 8 % hergestellt. Der Propengehalt betrug demnach ca. 42 %. Als Katalysatorsystem wurde Ethylaluminiumsesquichlorid (EASC) und VOCl₃ und als Molekulargewichtsregler n-Butylamin eingesetzt.

Der Aktivator 2-Chlor-2-phenyl-malonsäurediethylester wurde im Molverhältnis 8 : 1 zum VOCl₃ verwendet.

Die Reaktion wurde bei einer Innentemperatur von 50 °C und bei 5,5 bar durchgeführt.

Es wurde ein mittlerer Feststoffgehalt von 6,8 Gew.-% erzielt. Die Polymerlösung wurde anschließend unter intensiver Rührung mit destilliertem Wasser gestoppt und mit 0,8 % eines phenolischen Antioxidans stabilisiert. Danach wurde das Polymer in einer kontinuierlichen Anlage mit warmem Wasser und Dampf gefällt, wobei das Lösungsmittel als Azeotrop entfernt wurde. Die mittlere Verweilzeit der Polymerkrümel in der Entsolventierungsapparatur betrug etwa 1 h.

Die chemische Analyse des Polymers ergab: Propen - 42 %, Ethen - 49,8 %, ENB - 8,2 %, Chlorgehalt - 385 ppm.

### Vergleichsbeispiel A

Unter ansonsten identischen Polymerisationsbedingungen wie im Beispiel 1 wurde Dichlorphenylessigsäureethylester (DCPAE) als Aktivator eingesetzt. Die Aktivatorzudosierung wurde so eingestellt, daß der Feststoffgehalt der Polymerlösung gleich groß war wie im Beispiel 1. Dabei betrug das DCPAE/VOCl₃-Molverhältnis 5,6.

Die chemische Analyse des wie im Beispiel 1 behandelten Polymers ergab einen Chlorgehalt von 850 ppm.

### Vergleichsbeispiel B

Unter denselben Polymerisationsbedingungen wie in den anderen Beispielen wurde Perchlorvinylessigsäurebutylester als Aktivator eingesetzt. Zur Erzielung desselben Feststoffgehalts war ein Molverhältnis Aktivator/VOCl₃ = 4,9 notwendig.

Die Polymeranalyse zeigte einen Chlorgehalt von 1800 ppm.

## Patentansprüche

1. Verfahren zur Herstellung von Copolymeren aus Ethylen, einem α-Olefin und ggf. einem Dien mit nicht-konjugierten Doppelbindungen durch Lösungspolymerisation in Gegenwart von
(a) einer aluminiumorganischen Verbindung,
(b) einer Vanadinverbindung in der Wertigkeitsstufe +3 bis +5,
(c) einem Aktivator im Molverhältnis 0,5 bis 100 zu Vanadin,
dadurch gekennzeinet,
daß als Aktivator ein mit einer aromatischen Gruppe substituierter 2-Halogenmalonsäureester der allgemeinen Formel 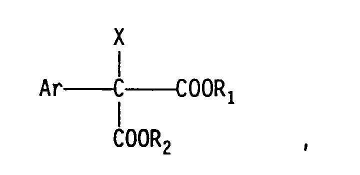 wobei X = F, Cl, Br oder J, Ar einen aromatischen Rest wie beispielsweise Phenyl, Pyridyl, Thienyl, der ggf. einfach oder mehrfach mit Alkyl- oder Alkoxygruppen substituiert und direkt oder über eine zusätzliche Carbonylgruppe mit dem zentralen C-Atom verbunden sein kann, R₁ bzw. R₂ Kohlenwasserstoffreste wie Alkyl-, Aryl-, Aralkyl-oder Cycloalkylgruppen mit 1 bis 20 Kohlenstoffatomen bedeuten, eingesetzt wird.

2. Verfahren gemäß Anspruch 1,
dadurch gekennzeichnet,
daß als aromatisch substituierte 2-Halogenmalonsäureester ein Alkylester der 2-Halogen-2-phenylmalonsäure eingesetzt wird.

3. Verfahren gemäß Anspruch 1 bis 2,
dadurch gekennzeichnet,
daß als aromatisch substituierte 2-Halogenmalonsäureester ein Alkylester der 2-Chlor-2-phenyl-malonsäure, wobei R₁ und R₂ gleichzeitig oder unabhängig eine Methyl-, Ethyl-, Propyl-, Butyl- oder Pentylgruppe darstellen, eingesetzt wird.

4. Verfahren gemäß Anspruch 1,
dadurch gekennzeichnet,
daß als aluminiumorganische Verbindung Ethylaluminiumsesquichlorid, Diethylaluminiumchlorid, Ethylaluminiumdichlorid, Diisobutylaluminiumchlorid, Isobutylaluminiumdichlorid, Isobutylaluminiumsesquichlorid, oder Trihexylaluminium eingesetzt wird.

5. Verfahren gemäß Anspruch 1,
dadurch gekennzeichnet,
daß als Vanadinverbindung Vanadinoxytrichlorid, Vanadintetrachlorid, Vanadinacetylacetonat, Vanadinnaphthenat, Triethoxyvanadat, Diethoxymonochlorvanadat, Ethoxydichlorvanadat, Tributoxyvanadat, Dibutoxymonochlorvanadat oder Butoxydichlorvanadat eingesetzt wird.

6. Verwendung der mit einer aromatischen Gruppe substituierter 2-Halogenmalonsäureester der allgemeinen Formel 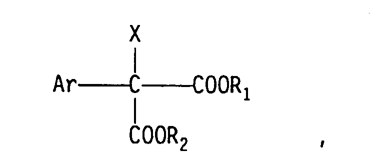 wobei X = F, Cl, Br oder J, Ar einen aromatischen Rest wie Phenyl, Pyridyl, Thienyl, der ggf. einfach oder mehrfach mit Alkyl- oder Alkoxygruppen substituiert und direkt oder über eine zusätzliche Carbonylgruppe mit dem zentralen C-Atom verbunden sein kann, R₁ bzw. R₂ Kohlenwasserstoffreste wie Alkyl-, Aryl-, Aralkyl- oder Cycloalkylgruppen mit 1 bis 20 Kohlenstoffatomen bedeuten, als Aktivator bei der Lösungspolymerisation von Copolymeren aus Ethylen, einem α-Olefin und ggf. einem Dien mit nicht-konjugierten Doppelbindungen.

## Claims

1. A process for preparing copolymers of ethylene, an α-olefin and, if desired, a diene having non-conjugated double bonds by solution polymerization in the presence of
(a) an organoaluminium compound,
(b) a vanadium compound in the oxidation state from +3 to +5,
(c) an activator in a molar ratio of from 0.5 to 100 to vanadium,
characterized in that a 2-halomalonic ester substituted by an aromatic group and having the general formula 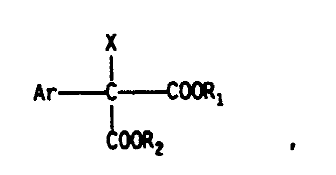 where X = F, Cl, Br or I, Ar is an aromatic radical such as, for example, phenyl, pyridyl, thienyl, which can be unsubstituted, monosubstituted or polysubstituted by alkyl or alkoxy groups and can be bound to the central carbon atom either directly or via an additional carbonyl group, R₁ and R₂ are hydrocarbon radicals such as alkyl, aryl, aralkyl or cycloalkyl groups having from 1 to 20 carbon atoms is used as activator.

2. A process according to claim 1, characterized in that an alkyl ester of 2-halo-2-phenylmalonic acid is used as aromatically substituted 2-halomalonic ester.

3. A process according to either of claims 1 and 2, characterized in that an alkyl ester of 2-chloro-2-phenyl malonic acid, where R₁ and R₂ are simultaneously or independently methyl, ethyl, propyl, butyl or pentyl groups is used as aromatically substituted 2-halomalonic ester.

4. A process according to claim 1, characterized in that ethylaluminium sesquichloride, diethylaluminium chloride, ethylaluminium dichloride, diisobutylaluminium chloride, isobutylaluminium dichloride, isobutylaluminium sesquichloride or trihexylaluminium is used as organoaluminium compound.

5. A process according to claim 1, characterized in that vanadium oxytrichloride, vanadium tetrachloride, vanadium acetylacetonate, vanadium naphthenate, triethoxyvanadate, diethoxymonochlorovanadate, ethoxydichlorovanadate, tributoxyvanadate, dibutoxymonochlorovanadate or butoxydichlorovanadate is used as vanadium compound.

6. Use of the 2-halomalonic esters substituted by an aromatic group and having the general formula 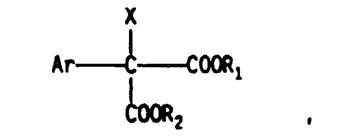 where X = F, Cl, Br or I, Ar is an aromatic radical such as phenyl, pyridyl, thienyl, which can be unsubstituted, monosubstituted or polysubstituted by alkyl or alkoxy groups and can be bound to the central carbon atom either directly or via an additional carbonyl group, R₁ and R₂ are hydrocarbon radicals such as alkyl, aryl, aralkyl or cycloalkyl groups having from 1 to 20 carbon atoms, as activator in the solution polymerization of copolymers of ethylene, an α-olefin and, if desired, a diene having non-conjugated double bonds.

## Revendications

1. Procédé de fabrication de copolymères d'éthylène, d'une α-oléfine et le cas échéant d'un diène avec des doubles liaisons non conjuguées par polymérisation en solution en présence de
(a) un composé d'organo-aluminium,
(b) un composé de vanadium dans un état de valence de +3 à +5,
(c) un activateur dans un rapport molaire de 0,5 à 100 par rapport au vanadium,
caractérisé en ce qu'
on utilise comme activateur un ester d'acide 2-halogène-malonique monohalogéné, substitué par un groupe aromatique, de formule générale : 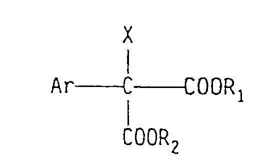 dans laquelle X = F, Cl, Br ou J, Ar représente un radical aromatique comme par exemple phényle, pyridyle, thiényle, qui peut le cas échéant être mono- ou poly-substitué par des groupes alkyle ou alcoxy et être lié directement ou par l'intermédiaire d'un groupe carbonyle supplémentaire à l'atome de carbone central, R1 ou selon les cas R2 représentent des radicaux hydrocarbonés ayant de 1 à 20 atomes de carbone comme des groupes alkyle, aryle, aralkyle ou cycloalkyle.

2. Procédé selon la revendication 1,
caractérisé en ce qu'
on utilise comme ester d'acide 2-halogènemalonique aromatiquement substitué un alkylester de l'acide 2-halogène-2-phénylmalonique.

3. Procédé selon les revendications 1 à 2,
caractérisé en ce qu'
on utilise comme ester d'acide 2-halogènemalonique aromatiquement substitué un alkylester de l'acide 2-chloro-2-phénylmalonique, dans lequel R₁ et R₂ représentent simultanément ou indépendamment un groupe méthyle, éthyle, propyle, butyle ou pentyle.

4. Procédé selon la revendication 1,
caractérisé en ce qu'
on utilise comme composé d'organo-aluminium le sesquichlorure d'éthylaluminium, le chlorure de diéthylaluminium, le dichlorure d'éthylaluminium, le chlorure de diisobutylaluminium, le dichlorure d'isobutylaluminium, le sesquichlorure d'isobutylaluminium ou le trihexylaluminium.

5. Procédé selon la revendication 1,
caractérisé en ce qu'
on utilise comme composé de vanadium l'oxytrichlorure de vanadium, le tétrachlorure de vanadium, l'acétylacétonate de vanadium, le naphténate de vanadium, le triéthoxyvanadate, le diéthoxymonochlorovanadate, l'éthoxydichlorovanadate, le tributoxyvanadate, le dibutoxymonochlorovanadate ou le butoxydichlorovanadate.

6. Utilisation d'un ester d'acide 2-halogène-malonique monohalogéné, substitué par un groupe aromatique, de formule générale : 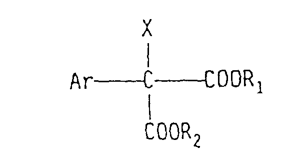 dans laquelle X = F, Cl, Br ou J, Ar représente un radical aromatique comme par exemple phényle, pyridyle, thiényle, qui peut le cas échéant être mono- ou poly-substitué par des groupes alkyle ou alcoxy et être lié directement ou par l'intermédiaire d'un groupe carbonyle supplémentaire à l'atome de carbone central, R₁ ou selon les cas R₂ représentent des radicaux hydrocarbonés ayant de 1 à 20 atomes de carbone comme des groupes alkyle, aryle, aralkyle ou cycloalkyle,
comme activateur dans la polymérisation en solution de copolymères d'éthylène, d'une α-oléfine et le cas échéant d'un diène avec des doubles liaisons non conjuguées.
